# EUROPÄISCHE PATENTSCHRIFT

(11) **EP 1 873 432 B1**
(45) Veröffentlichungstag und Bekanntmachung des Hinweises auf die Patenterteilung: **10.08.2011**
(21) Anmeldenummer: 07110436.8
(22) Anmeldetag: 18.06.2007
(51) Int. Cl.: F16K 24/04, F16K 24/06

(54) **Vorrichtung zum automatischen Be- und Entlüften eines Druckfluid-Versorgungssystems**
Device for automatic ventilation and de-aeration of pressure fluid supply system
Dispositif destiné à remplir et vider automatiquement un système d'alimentation en liquide sous pression

(30) Priorität: 29.06.2006 DE 102006030160
(43) Veröffentlichungstag der Anmeldung: 02.01.2008
(73) Patentinhaber: Schaeffler Technologies GmbH & Co. KG, 91074 Herzogenaurach (DE)
(72) Erfinder: Kremer, Thomas, 90762 Fürth (DE); Goraj, Robert, 91052 Erlangen (DE)

(56) Entgegenhaltungen:
- EP-A- 0 515 215
- DE-A1- 1 901 776
- DE-A1- 10 041 555
- GB-A- 583 550
- US-A- 4 759 476

## Beschreibung

### Gebiet der Erfindung

Die Erfindung betrifft eine Vorrichtung zum Be- und Entlüften eines Druckfluid-Versorgungssystems, mit einem automatischen Ventil, welches einen gegen die Entlüftungsrichtung öffnenden Verschlusskörper sowie diesem Verschlusskörper zugeordnete, diesen in Öffnungsrichtung belastende Betätigungsmittel umfasst, die von einem auf den Verschlusskörper einwirkendem Druckfluid überdrückbar sind.

### Hintergrund der Erfindung

Druckfluid-Versorgungssysteme, insbesondere ölhydraulische Versorgungssysteme zur Schaltölbereitstellung für Verbrennungsmotoren, müssen, um eine einwandfreie Funktion zu gewährleisten, luftfrei, also vollständig mit inkompressiblem Druckfluid gefüllt sein. Im Allgemeinen wird das Drucköl derartiger Versorgungssysteme von einer Ölpumpe bereitgestellt, die vom Verbrennungsmotor selbst angetrieben werden.

Nach dem Abstellen des Verbrennungsmotors und damit auch der Ölpumpe nimmt der Druck im Versorgungssystem infolge einer Abkühlung des Öls und einer damit einhergehenden Reduzierung des Ölvolumens ab, und es kommt zu einer Luftansaugung, beispielsweise über Leckstellen im Versorgungssystem oder bei den druckölbetätigten Aggregaten. Die angesaugte Luft muss beim erneuten Start des Verbrennungsmotors aus dem Versorgungssystem entfernt werden. Dies erfolgt üblicherweise über am höchsten Punkt des Versorgungssystems, wo sich die angesaugte Luft vorwiegend sammelt, angeordnete Entlüftungsventile. Damit die beim Stillsetzen des Verbrennungsmotors vom Versorgungssystem angesaugte Luft sich gezielt in dem Bereich befindet, in dem das Entlüftungsventil angeordnet ist, ist dieses im Allgemeinen gleichzeitig auch als Belüftungsventil ausgebildet, welches manuell geöffnet wird oder sich automatisch öffnet.

Durch die CH 301104 ist ein automatisches Ventil zur Be- und Entlüftung von Rohrleitungen bekannt, bei welchem der etwa tellerartig ausgebildete Verschlusskörper durch sein Eigengewicht in Öffnungsrichtung derart belastet ist, dass das Ventil im drucklosen Zustand der Rohrleitung geöffnet ist. Eine in Schließrichtung auf den Verschlusskörper wirkende Feder oder - in einer anderen Ausgestaltung - ein Gegengewicht ist so ausgelegt, dass sich das Ventil bei druckloser Leitung auf einen Teilhub einstellt. Wenn die Leitung wieder mit Wasser gefüllt wird, dann kann die durch einströmendes Wasser verdrängte Luft durch das geöffnete Ventil entweichen. Wenn alle Luft aus der Druckleitung verdrängt ist, trifft Wasser auf das Ventil. Die damit verbundene Druckzunahme bewirkt dann ein Schließen des Ventils.

Ein grundsätzlicher Nachteil dieses bekannten Ventils wird darin gesehen, dass der Verschlusskörper durch sein Eigengewicht in seine Öffnungsstellung verstellt wird, was bedeutet, dass dieses Ventil im Wesentlichen nur in der in der dortigen Zeichnung dargestellten senkrechten Stellung mit nach unten öffnendem Verschlusskörper eingebaut werden kann. Abweichungen von dieser senkrechten Stellung führen dazu, dass gegebenenfalls nur noch eine Komponente der Gewichtskraft in Öffnungsrichtung wirkt, womit sich auch die in der Patentschrift erwähnte genaue Abstimmung auf die in Schließrichtung wirkende Feder bzw. das Gegengewicht und damit die Funktion des Ventils verändert. Aus diesem Grund ist das bekannte Ventil nur für den stationären Einsatz, nicht jedoch beispielsweise für Verbrennungsmotoren von Kraftfahrzeugen verwendbar.

Da der Verschlusskörper und die in Schließrichtung wirkende Feder bzw. das Gegengewicht ein Schwingungssystem bilden, besteht außerdem die Gefahr von Vibrationen im Betrieb. Aus diesem Grund ist das bekannte Ventil mit einem aufwendigen hydraulischen Dämpfungssystem zum Dämpfen der Schließbewegung ausgestattet, wodurch dieses Ventil konstruktiv und baulich sehr aufwendig ist sowie einen großen Einbauraumbedarf hat.

Durch die DE 100 41 555 wird ein automatisches Ventil der im Oberbegriff des Anspruchs 1 genannten Art bekannt.

### Aufgabe der Erfindung

Der Erfindung liegt die Aufgabe zugrunde, eine Vorrichtung zum Be- und Entlüften eines Druckfluid-Versorgungssystems zu schaffen, welche konstruktiv und baulich einfach ist und beliebige Einbaustellungen zulässt.

### Zusammenfassung der Erfindung

Der Erfindung liegt die Erkenntnis zugrunde, dass durch eigengewichtsunabhängige Betätigungsmittel zum Öffnen des Verschlusskörpers sowohl eine bauliche Vereinfachung als auch die Nutzungsform realisierbar ist, das Ventil in beliebiger räumlicher Lage einzubauen und damit für den nicht-stationären Betrieb beispielsweise in Fahrzeugen einsetzbar zu machen.

Die Erfindung geht daher aus von einer Vorrichtung zum Be- und Entlüften eines Druckfluid-Versorgungssystems, mit einem automatischen Ventil, welches einen gegen die Entlüftungsrichtung öffnenden Verschlusskörper sowie diesem Verschlusskörper zugeordnete, diesen in Öffnungsrichtung belastende Betätigungsmittel umfasst, die von einem auf den Verschlusskörper einwirkenden Druckfluid überdrückbar sind. Dabei ist erfindungsgemäß vorgesehen, dass der Verschlusskörper durch Federmittel belastet ist, deren Auslegungs-Federkraft größer als eine durch einen ausströmenden Luftstrom auf den Verschlusskörper aufgebrachte und gegebenenfalls durch eine in Schließrichtung wirkende Gewichtskomponente des Verschlusskörpers erzeugte Gegenkraft ist.

Die Federmittel sind so ausgelegt, dass sich das Ventil bei einem Druckabfall im Versorgungssystem öffnet und damit eine gezielte Belüftung im Bereich des Ventils gewährleistet ist, und während der Entlüftungsphase, in der der Verschlusskörper von der Luftströmung beaufschlagt wird, zunächst geöffnet bleibt und erst dann schließt, wenn der Verschlusskörper vom erneut unter Druck gesetzten Druckfluid beaufschlagt wird.

Die Auslegung der Federmittel ist zudem so getroffen, dass beispielsweise auch bei einem senkrechten Einbau des Ventils mit einer nach unten gerichteten Öffnungsbewegung des Verschlusskörpers dessen Gewicht von den Federmitteln aufgenommen wird, so dass die oben beschriebene Funktion des Ventils auch bei dieser Einbaulage gewährleistet ist.

Das erfindungsgemäße Ventil kann im Aufbau sehr einfach ausgebildet sein. Es umfasst beispielsweise ein mit einer Eingangsöffnung und einer Ausgangsöffnung ausgestattetes Ventilgehäuse mit einem darin zwischen einer an einem Ventilsitz anliegenden Schließstellung und einer davon abgehobenen, durch einen Anschlag definierten Öffnungsstellung vorzugsweise frei beweglich Verschlusskörper.

Das Ventilgehäuse hat im Wesentlichen die Form eines Kreiszylinders, an dessen einen Stirnseite die Eingangsöffnung und an dessen anderen Stirnseite die Ausgangsöffnung ausgebildet ist.

Auch ist dabei vorgesehen, dass der Kreiszylinder in Entlüftungsrichtung nacheinander angeordnet einen ersten Abschnitt größeren Durchmessers und einen zweiten Abschnitt kleineren Durchmessers hat, dass der Verschlusskörper im ersten Abschnitt in Richtung der Zylinderachse beweglich angeordnet ist und mit einem im Übergangsbereich zwischen erstem und zweitem Abschnitt ausgebildeten Ventilsitz zusammenwirkt, und dass die Federmittel eine Schrauben-Druckfeder umfassen, die zwischen dem Verschlusskörper und einem an der Innenwand des zweiten Abschnittes ausgebildeten Innenbund angeordnet ist.

Der Verschlusskörper ist vorzugsweise eine Kugel, die in einem im ersten Abschnitt angeordneten Führungskäfig geführt ist, wobei der die Öffnungsstellung des Ventils definierende Anschlag an der Innenwand des Führungskäfigs ausgebildet ist.

Eine bevorzugte Einbauanordnung des erfindungsgemäßen Ventils sieht vor, dass das kreiszylindrische Ventilgehäuse in zumindest annähernd senkrechter Lage mit nach oben weisender Eingangsöffnung in eine Bodenwand einer druckfluidführenden Versorgungsleitung oder dergleichen eingebaut ist, derart, dass das Ventilgehäuse nach oben in die Leitung hineinragt, und dass die Anschlussleitungen für an das Versorgungssystem angeschlossene Verbraucher parallel zu dem Ventil an die Bodenwand der Leitung angeschlossen sind. Auf diese Weise bildet das Ventil eine Art Überlaufstutzen, welcher in dem Behälter einen bestimmten, durch die Höhe der Eingangsöffnung des Ventils über der Bodenwand des Behälters definierten Druckfluid-Pegelstand gewährleistet, so dass beim erneuten Anlauf des Systems von Anfang an eine Versorgung der mit Drucköl zu versorgenden Aggregate sichergestellt ist.

### Kurze Beschreibung der Zeichnungen

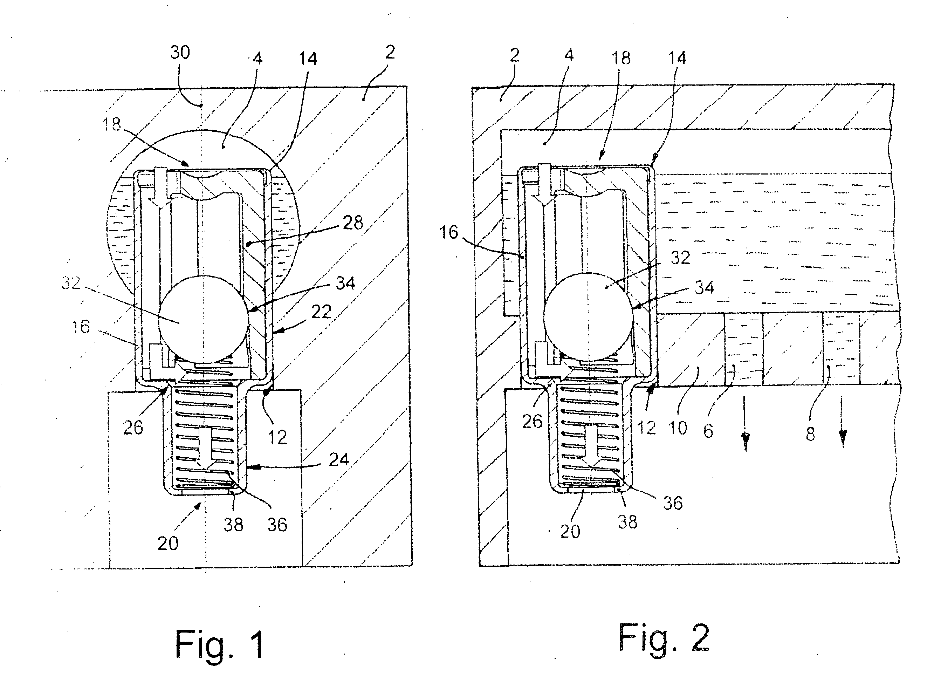

Die Erfindung wird im Folgenden anhand der beiliegenden Zeichnung an einer Ausführungsform näher erläutert. Darin zeigt
- Fig. 1: schematisch einen Querschnitt durch ein Gehäuse mit einer druckfluidführenden Leitung und einem in diese eingebauten Be- und Entlüftungsventil, und
- Fig. 2: einen Längsschnitt durch das Gehäuse der Fig. 1.

### Detaillierte Beschreibung der Zeichnung

In einem Gehäuse 2, welches beispielsweise Teil eines Drucköl-Versorgungssystems für einen Verbrennungsmotor ist, befindet sich eine Versorgungsleitung 4, von der aus über Anschlussleitungen 6, 8 mit Drucköl zu versorgende, nicht dargestellte Aggregate versorgt werden. Die Versorgungsleitung 4 ist im Bereich ihrer Bodenwand 10 mit einer Entlüftungsbohrung 12 versehen, in die ein als Ganzes mit 14 bezeichnetes Ventil fluiddicht eingesetzt ist.

Das Ventil 14 umfasst ein im Wesentlich kreiszylinderförmiges Ventilgehäuse 16, an dessen oberen Stirnseite eine Eingangsöffnung 18 und an dessen unteren Seite eine Ausgangsöffnung 20 ausgebildet ist. Das Ventilgehäuse 16 weist einen oberen, ersten Abschnitt 22 größeren Durchmessers und einen unteren, zweiten Abschnitt 24 kleineren Durchmessers auf. An der Innenwand des Ventilgehäuses 16 im Übergang vom ersten Abschnitt 22 zum zweiten Abschnitt 24 ist ein Ventilsitz 26 ausgebildet.

Im Ventilgehäuse 16 ist ein Führungskäfig 28 angeordnet, in welchem ein in Richtung der Zylinderachse 30 des Ventils frei beweglicher, kugelförmiger Verschlusskörper 32 geführt ist. Der Verschlusskörper 32 ist zwischen einer am Ventilsitz 26 anliegenden Schließstellung und einer davon abgehobenen, durch einen an der Innenwand des Führungskäfigs 28 ausgebildeten Anschlag 34 definierten Öffnungsstellung beweglich.

Der Verschlusskörper 32 wird im drucklosen Zustand des Versorgungssystems bzw. der Versorgungsleitung 4 durch Federmittel 36 in seine Öffnungsstellung gehalten. Die Federmittel 36 sind im vorliegenden Ausführungsbeispiel durch eine Schrauben-Druckfeder gebildet, die sich an einem an der Innenwand des zweiten Abschnittes 24 ausgebildeten Innenbund 38 abstützt.

### Die Funktion des Ventils 14 ist wie folgt beschrieben:

Im drucklosen Zustand des Versorgungssystems bzw. der Versorgungsleitung 4 wird der Verschlusskörper 32 durch die in Öffnungsrichtung wirkenden Federmittel 36 in seiner in den Figuren dargestellten, am Anschlag 34 anliegenden Öffnungsstellung gehalten. Wenn das Versorgungssystem wieder unter Druck gesetzt wird, wird zunächst die im oberen Bereich der Versorgungsleitung 4 angesammelte Luft über die Eingangsöffnung 18, das Ventilgehäuse 16 und die Ausgangsöffnung 20 in Richtung der dargestellten Pfeile aus der Versorgungsleitung 4 und dem Ventil ausgeschoben. Die dabei durch die ausströmende Luft auf den Verschlusskörper 32 ausgeübte Kraft und das Gewicht des Verschlusskörpers 32 reichen nicht aus, um die Federmittel 36 zusammenzudrücken und den Verschlusskörper 32 an den Ventilsitz 26 anzulegen.

Wenn die im System vorhandene Luft ausgestoßen ist und Drucköl auf den Verschlusskörper 32 trifft, wird dieser infolge des höheren Druckes an den Ventilsitz 26 angelegt, so dass das Ventil sich schließt.

Wenn der Druck in der Versorgungsleitung 4 nach dem Abstellen des Verbrennungsmotors wieder abfällt und das Drucköl infolge Abkühlung schrumpft, öffnet das Ventil 14 wieder, so dass das System gezielt an dieser Stelle belüftet wird.

Wie die Figuren erkennen lassen, ist das Ventilgehäuse 16 so in die Versorgungsleitung 4 eingebaut, dass es nach oben möglichst weit in diese hineinragt und so einen bestimmten Pegelstand in der Versorgungsleitung 4 sicherstellt, so dass beim erneuten Anlauf des Systems bei Förderbeginn der Druckfluid-Pumpe eine Versorgung der an die Anschlussleitungen 6, 8 angeschlossenen Aggregate sichergestellt ist.

### Bezugszeichenliste

- 2: Gehäuse
- 4: Versorgungsleitung
- 6: Anschlussleitung
- 8: Anschlussleitung
- 10: Bodenwand
- 12: Entlüftungsbohrung
- 14: Ventil
- 16: Ventilgehäuse
- 18: Eingangsöffnung
- 20: Ausgangsöffnung
- 22: Erster Abschnitt
- 24: Zweiter Abschnitt
- 26: Ventilsitz
- 28: Führungskäfig
- 30: Zylinderachse
- 32: Verschlusskörper
- 34: Anschlag
- 36: Federmittel
- 38: Innenbund

## Patentansprüche

1. Vorrichtung zum Be- und Entlüften eines Druckfluid-Versorgungssystems, mit einem automatischen Ventil (14), welches ein mit einer Eingangsöffnung (18) und einer Ausgangsöffnung (20) ausgestattetes Ventilgehäuse (16) aufweist, mit einem darin zwischen einer an einem Ventilsitz (26) anliegenden Schließstellung und einer davon abgehobenen, durch einen Anschlag (34) definierten Öffnungsstellung beweglichen sowie gegen die Entlüftungsrichtung öffnenden Verschlusskörper (32), und mit diesem Verschlusskörper (32) zugeordnete, diesen in Öffnungsrichtung belastende Federmittel (36), die von einem auf den Verschlusskörper (32) einwirkendem Druckfluid überdrückbar sind,
**dadurch gekennzeichnet, dass** das Ventilgehäuse (16) derartig ausgebildet ist, dass es in zumindest annähernd senkrechter Lage mit nach oben weisender Eingangsöffnung (18) in eine Bodenwand (10) einer druckfluidführenden Versorgungsleitung (4) oder dergleichen so einbaubar ist, dass das Ventilgehäuse (16) nach oben in die Versorgungsleitung (4) hineinragt,
dass die Auslegungs-Federkraft der Federmittel (36) größer ist als eine Gegenkraft, die aus einer in Schließrichtung wirkenden Gewichtskomponente des Verschlusskörpers (32) und einer durch einen ausströmenden Luftstrom auf den Verschlusskörper (32) bewirkte Kraft besteht,
dass das Ventilgehäuse (16) im Wesentlichen die Form eines Kreiszylinders hat, an dessen einen Stirnseite die Eingangsöffnung (18) und an dessen anderer Stirnseite die Ausgangsöffnung (20) ausgebildet ist, dass der Kreiszylinder des Ventilgehäuses (16) in Entlüftungsrichtung nacheinander angeordnet einen ersten Abschnitt (22) größeren Durchmessers und einen zweiten Abschnitt (24) kleineren Durchmessers hat, dass der Verschlusskörper (32) im ersten Abschnitt (22) in Richtung der Zylinderachse (30) beweglich angeordnet ist sowie mit einem im Übergangsbereich zwischen erstem Abschnitt (22) sowie zweitem Abschnitt (24) ausgebildeten Ventilsitz (26) zusammenwirkt, und dass die Federmittel (36) eine Schrauben-Druckfeder umfassen, die zwischen dem Verschlusskörper (32) und einem an der Innenwand des zweiten Abschnittes (24) ausgebildeten Innenbund (38) angeordnet ist.

2. Vorrichtung nach Anspruch 1, **dadurch gekennzeichnet, dass** der Verschlusskörper (32) eine Kugel ist, die in einem im ersten Abschnitt (22) angeordneten Führungskäfig (28) geführt ist, und dass der die Öffnungsstellung des Ventils (14) definierende Anschlag (34) an der Innenwand des Führungskäfigs (28) ausgebildet ist.

3. Vorrichtung nach Anspruch 1 oder 2, **dadurch gekennzeichnet, dass** Anschlussleitungen (6, 8) für an das Versorgungssystem angeschlossene Verbraucher parallel zu dem Ventil (14) an die Bodenwand (10) der Versorgungsleitung (4) angeschlossen sind.

## Claims

1. Device for the aeration and deaeration of a pressure fluid supply system, with an automatic valve (14) which has a valve housing (16) equipped with an inlet port (18) and with an outlet port (20), with a closing body (32) which is movable in the said valve housing between a closing position bearing against a valve seat (26) and an opening position lifted off from the latter and defined by a stop (34) and which opens opposite to the deaeration direction, and with spring means (36) which are assigned to this closing body (32) and load the latter in the opening direction and which can be pressed down by a pressure fluid acting upon the closing body (32), **characterized in that** the valve housing (16) is designed in such a way that it can be installed in an at least approximately vertical position, with the inlet port (18) pointing upwards, into a bottom wall (10) of a pressure-fluid-carrying supply line (4) or the like, such that the valve housing (16) projects upwards into the supply line (4), **in that** the design spring force of the spring means (36) is higher than a counterforce which consists of a weight component, acting in the closing direction, of the closing body (32) and of a force caused upon the closing body (32) by an outflowing airstream, **in that** the valve housing (16) is essentially in the form of a circular cylinder, on one end face of which the inlet port (18) is formed and on the other end face of which the outlet port (20) is formed, **in that** the circular cylinder of the valve housing (16) has, arranged in succession in the deaeration direction, a first portion (22) of larger diameter and a second portion (24) of smaller diameter, **in that** the closing body (32) is arranged movably in the direction of the cylinder axis (30) in the first portion (22) and cooperates with a valve seat (26) formed in the transitional region between the first portion (22) and second portion (24), and **in that** the spring means (36) comprise a helical compression spring which is arranged between the closing body (32) and an inner collar (38) formed on the inner wall of the second portion (24).

2. Device according to Claim 1, **characterized in that** the closing body (32) is a ball which is guided in a guide cage (28) arranged in the first portion (22), and **in that** the stop (34) defining the opening position of the valve (14) is formed on the inner wall of the guide cage (28).

3. Device according to Claim 1 or 2, **characterized in that** connecting lines (6, 8) for consumers connected to the supply system are connected, parallel to the valve (14), to the bottom wall (10) of the supply line (4).

## Revendications

1. Dispositif destiné à remplir et vider un système d'alimentation en fluide sous pression, comprenant une soupape automatique (14) qui présente un boîtier de soupape '(16) muni d'une ouverture d'entrée (18) et d'une ouverture de sortie (20), un corps de fermeture (32) déplaçable dans celui-ci entre une position de fermeture s'appliquant à un siège de soupape (26) et une position d'ouverture définie par une butée (34), soulevée du siège de soupape, et s'ouvrant à l'encontre du sens de vidange, et des moyens de ressort (36) associés à ce corps de fermeture (32), sollicitant celui-ci dans la direction d'ouverture, qui peuvent être surpressurisés par un fluide sous pression agissant sur le corps de fermeture (32),
**caractérisé en ce que** le boîtier de soupape (16) est réalisé de telle sorte qu'il puisse être monté dans une position au moins approximativement verticale avec l'ouverture d'entrée (18) tournée vers le haut dans une paroi de fond (10) d'une conduite d'alimentation (4) ou similaire conduisant le fluide sous pression, de telle sorte que le boîtier de soupape (16) pénètre vers le haut dans la conduite d'alimentation (4),
**en ce que** la force de ressort de conception des moyens de ressort (36) est supérieure à une force conjuguée qui se compose d'une composante de poids du corps de fermeture (32) agissant dans la direction de fermeture et d'une force provoquée par un flux d'air sortant et appliquée au corps de fermeture (32),
**en ce que** le boîtier de soupape (16) a essentiellement la forme d'un cylindre circulaire sur un côté frontal duquel est réalisée l'ouverture d'entrée (18) et sur l'autre côté frontal duquel est réalisée l'ouverture de sortie (20),
**en ce que** le cylindre circulaire du boîtier de soupape (16) présente une première portion (22) de plus grand diamètre et une deuxième portion (24) de plus petit diamètre disposées l'une derrière l'autre dans la direction de vidange,
**en ce que** le corps de fermeture (32) est disposé de manière déplaçable dans la première portion (22) dans la direction de l'axe du cylindre (30) et coopère avec un siège de soupape (26) réalisé dans la région de transition entre la première portion (22) et la deuxième portion (24), et **en ce que** les moyens de ressort (36) comprennent un ressort de compression à boudin, qui est disposé entre le corps de fermeture (32) et un épaulement interne (38) réalisé sur la paroi interne de la deuxième portion (24).

2. Dispositif selon la revendication 1, **caractérisé en ce que** le corps de fermeture (32) est une bille qui est guidée dans une cage de guidage (28) disposée dans la première portion (22), et **en ce que** la butée (34) définissant la position d'ouverture de la soupape (14) est réalisée sur la paroi interne de la cage de guidage (28).

3. Dispositif selon la revendication 1 ou 2, **caractérisé en ce que** des conduites de raccordement (6, 8) pour des consommateurs raccordés au système d'alimentation sont raccordées parallèlement à la soupape (14) à la paroi de fond (10) de la conduite d'alimentation (4).
